# EUROPEAN PATENT SPECIFICATION

(11) **EP 2 308 777 B1**
(45) Date of publication and mention of the grant of the patent: **26.12.2012**
(21) Application number: 10187063.2
(22) Date of filing: 08.10.2010
(51) Int. Cl.: B65G 1/04

(54) **Wheel assembly of an automated warehouse shuttle and shuttle with said wheel assembly**
Radanordnung eines Shuttles für automatisierte Lager und Shuttle mit derartiger Radanordnung
Ensemble de roues de navette d'entrepôt automatique et navette avec cet ensemble de roues

(30) Priority: 09.10.2009 IT TO20090773
(43) Date of publication of application: 13.04.2011
(73) Proprietor: ICAM S.r.l., Putignano (IT)
(72) Inventor: Bianco, Graziano, 70017 Putignano (IT); Bianco, Roberto, 70017 Putignano (IT); Lombardi, Rocco Nicola, 70019 Treggiano (IT); Cattani, Enrico, 19122 La Spezia (IT); Bonvino, Vincenzo, 70054 Giovinazzo (IT); Dileo, Michele, 70022 Altamura (IT); Anzalone, Giuseppe, 95031 Adrano (IT)
(74) Representative: Jorio, Paolo

(56) References cited:
- JP-A- 8 157 016
- JP-A- 2000 276 228
- JP-A- 2003 067 053

## Description

The present invention refers to a wheel assembly according to claim 1 and to an automated warehouse shuttle according to claim 8.

Automated warehouses comprising a fleet of shuttles, remote controlled by a central control unit, that travel in a structure where load units, such as for example pallets, are stocked, are known in the art from patent application W02005077789 in the name of the same applicant.

The shuttles, when unloaded, are able to pass below the pallets and can travel in two reciprocally orthogonal directions. In each aisle of the warehouse structure, the wheels of the shuttles run on two parallel horizontal tracks. Crosswise centring of the shuttles in the aisle during longitudinal travel is assured by idle side rollers that revolve about their respective vertical axes and travel in contact with side guide walls alongside the two tracks. Obviously, such side guide walls are not present at intersections between the aisles in order to leave space for the shuttle to change direction.

The solution described above is not very satisfactory in that the shuttle, as it moves forward, is normally subject to impacts against the side guide walls with a consequent risk of damage to the warehouse structure, to the shuttle and to the load units transported and/or stocked. Such impacts are due to the fact that the width of the aisle, measured between the side guide walls, is not perfectly constant along the shuttle path. In fact, the position and parallelism of the side guide walls do not comply strictly with project requirements due to geometric and/or dimensional errors, and/or imprecise assembly of the warehouse structure.

Also, contact between the rollers and the guide walls generates friction which must be overcome, with consequent consumption of energy, and which in time also causes wear. Such wear increases side clearance between the rollers and the guide walls, with a further downgrading of precise crosswise centring of the shuttle in the aisle and, therefore, side impacts. An excessive increase in side clearance may cause swaying of the shuttle as it moves along its path and, therefore, imprecise positioning at the moment in which the shuttle stops, for example at intersections or at the pallet places.

Accordingly, it is particularly important to stop the shuttle precisely at the centre of the intersections so that it can enter a new crosswise aisle without impacts. To perform this function, each intersection of the warehouse structure has a respective mechanical stopping device that is activated in order to stop the shuttle precisely at the centre of the intersection; however, this solution tends to make the structure bulky and complex.

JP 08157016 describes a wheel assembly of an automated warehouse shuttle according to the preamble of claim 1.

The aim of the present invention is to provide a wheel assembly of an automated warehouse shuttle able to solve the above problems in a simple, economical manner with a relatively limited number of components.

According to the present invention, a wheel assembly of an automated warehouse shuttle is provided, as defined in claim 1.

The invention will now be described referring to the attached drawings which illustrate an example of a non-limiting embodiment thereof, in which:
- figure 1 is a perspective view of automated warehouse shuttle equipped with a preferred embodiment of the wheel assembly according to the present invention;
- figure 2 is a schematic, partial front view of the shuttle of figure 1, with a track shown in cross-section; and
- figure 3 is an enlarged view of the wheel assembly of the present invention in which parts have been removed for greater clarity.

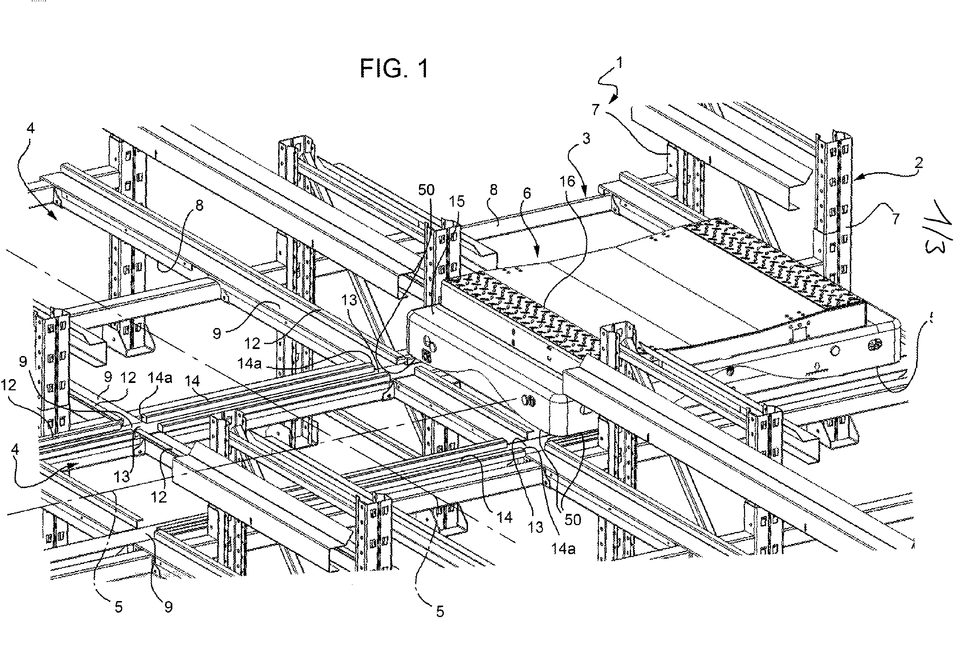

In figure 1, number 1 designates generally an automated warehouse (partially illustrated) comprising a fixed structure 2 having a plurality of tiered storage levels for stocking load units, such as for example pallets (not shown). Only one of said storage levels, identified by reference number 3, is partially illustrated. Each storage level 3 comprises a plurality of aisles 4 that extend in directions 5 at right angles to each other and through which a fleet of shuttles 6 moves (only one of which is illustrated): the term "shuttle" is used to designate a wheeled vehicle remote-controlled by a central control unit (not shown) or by means of a manual radio control (not shown) so as to travel in the aisles 4 and preferably also in adjacent areas around the structure 2, in order to permit automated retrieval, transport and depositing of the load units.

In particular, the structure 2 defines storage aisles in which the load units are stocked, and service aisles, without load units, arranged crosswise at the ends of the storage aisles. The warehouse 1 comprises at least one lifting device, for example an elevator or lift car (not shown) to transfer the shuttles 6 between the various storage levels 3.

Referring to figure 1, the structure 2 comprises: a plurality of vertical uprights 7; for each storage level 3, a horizontal frame 8 fastened to the uprights 7 and defining the floor of said storage level 3; and, for each storage aisle, supporting side brackets (not shown) fastened to the uprights 7 above the corresponding frame 8 on which to rest the side edges of the load units to be stocked.

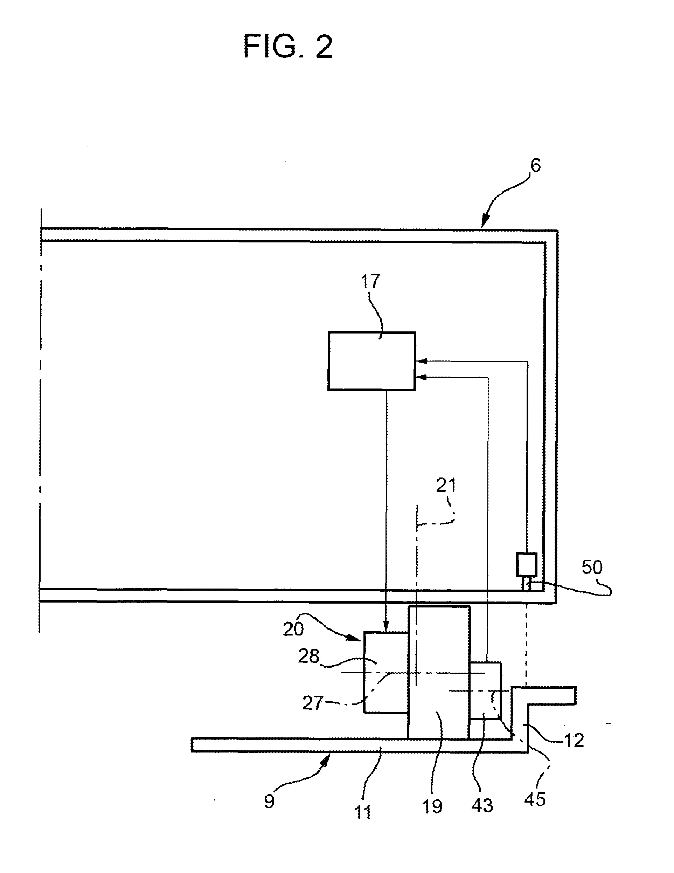

Referring to any one of the aisles 4, the frame 8 comprises or supports at least one runway or lane, defined by two rails 9 at a distance from each other and substantially parallel to the direction 5. With reference to figure 2, the rails 9 comprise respective horizontal tracks 11 on which the wheels of the shuttles 6 run; and respective vertical reference walls 12 which protrude upwards in relation to the tracks 11 and are arranged along the edge of said tracks 11. In particular, the walls 12 extend along the external edge in such a way as to also define the side limit of the lane.

With reference to figure 1, at intersections between the aisles 4, the walls 12 are interrupted at the position of the intersections 13 between the tracks 11 and then restart, whereby they comprise respective intermediate longitudinal portions 14 between the two tracks of the lane that is intersected. The ends 14a of the portions 14 are arranged respectively immediately after and immediately before the intersections 13.

Obviously, the aforementioned supporting side brackets extend parallel to the direction 5 and are fitted at a greater height than the rails 9: the shuttles 6, when unloaded, are of relatively reduced height in order to pass underneath the stocked load units without interfering with these.

The shuttle 1 comprises a substantially parallelepiped-shaped external enclosure 15, an upper supporting surface defined by a platform 16 located above the enclosure 15, and an activation system (not shown) which traverses the platform 16 up and down in relation to the enclosure 15 in order to permit load unit deposit or retrieval.

The shuttle 1 comprises an electronic unit 17, for example of the PLC type (illustrated schematically in figure 2) for wireless reception of the control signals emitted by the central control unit which, according to said control signals, activates the actuator device of the platform 16 and four powered wheels 19 of the shuttle 6 in order to move this to the destinations in the warehouse 1 established by said central control unit.

The four wheels 19 (front right, front left, rear right and rear left, considering one of the two directions of forward movement in direction 5) rotate around their respective vertical axes 21, thereby permitting steering of the shuttle 1.

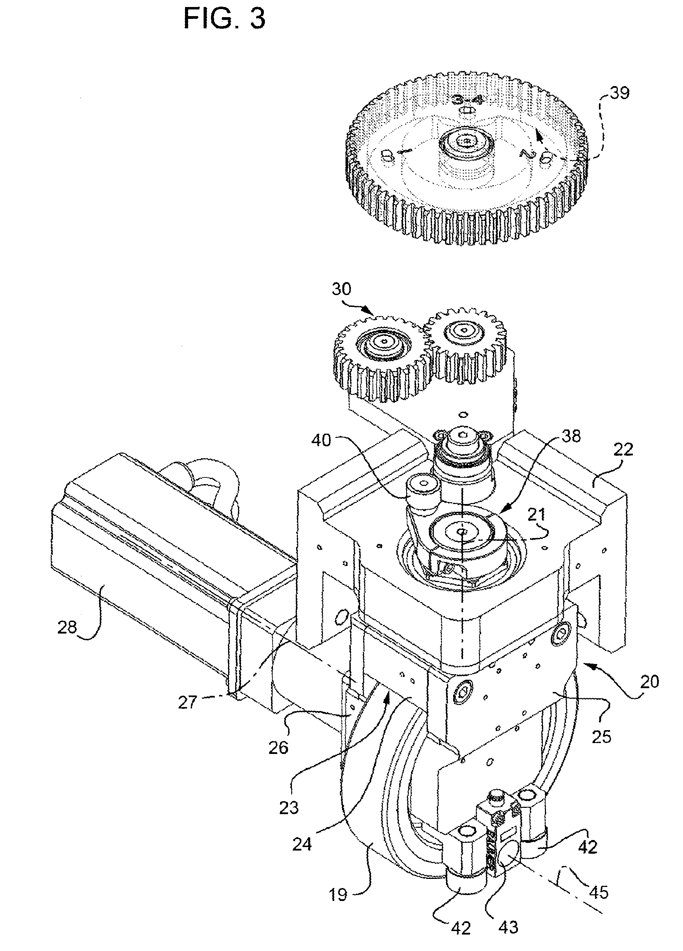

With reference to figure 3, the wheels 19 are part of respective wheel assemblies 20 that are pivotally coupled to respective supporting elements 22 so as to rotate about their respective axes 21 at an angle of 90°. Therefore, the shuttle 6 is able to travel in the two orthogonal directions 5 defined by the network of aisles 4. Steering takes place when the shuttle 6 is stopped at one of the intersections and is required to move into a aisle 4 at right angles to that in which it was travelling.

The wheel assembly 20 comprises a supporting structure 23, preferably fork shaped, comprising an upper portion 24, coupled to the element 22, and two sides 25, 26 arranged on opposite sides of the wheel 19. The wheel 19 is coupled to the sides 25, 26 in such a way as to rotate about its axis, indicated by reference number 27. The wheel assembly 20 also comprises an electric motor 28 which turns the wheel 19, is bidirectional and is coupled to the side 26 in a fixed position and co-axially to the wheel 19.

All four wheel assemblies 20 are made to rotate about their respective axes 21 by a steering system comprising a single bidirectional type electric motor (not shown). When driven, said motor activates a chain or belt transmission (not shown) which, in turn, activates four gear transmissions 30 fitted, respectively, on the supporting elements 22. In turn, each transmission 30 activates a corresponding transmission 38 that comprises a cam 39 fitted on a gear and a tappet element 40 fixed at an angle to the underlying structure 23.

For each wheel 19, there is at least one roller 42 and at least one contactless position or distance sensor 43. In particular, two rollers 42 are fitted on opposite sides of the sensor 43 and are aligned with the sensor 43 in a horizontal direction orthogonal to the axis 27. The rollers 42 rotate idly about their respective vertical axes, define the side end of the wheel assembly 20 and are substantially arranged at the same height as the walls 12 (therefore, below the axis 27 in side view). The width of the shuttle 6 measured between the right and left rollers 42 is less than the distance between the walls 12 of the lane, whereby the shuttle 6 travels in the lane with a certain amount of crosswise clearance. When the walls 12 and the rollers 42 come into contact, they perform a safety or containment function in the case of side swaying of the shuttle 6. Viewed from above, the sensor 43 is aligned with the axis 27 of the wheel 19, is arranged below the axis 27, and points in a direction 45 parallel to the axis 27 in such a way as to detect the wall 12 and to emit a related distance signal, indicating the position of the shuttle 6 in relation to the wall 12. For example, the sensors 43 are inductive sensors with faster response times than ultrasound sensors.

Similarly, the shuttle 6 comprises, for each side of the enclosure 15, a respective pair of contactless presence sensors 50 (figures 1 and 2) consisting, for example, of optical fibre photo-electric sensors fitted in fixed positions close to the lower side edges of the enclosure 15. The sensors 50 point in a downwards direction in such a way as to detect the presence/absence of the walls 12 along the path of the shuttle 6 and to emit the respective presence signals. The two sensors 50 of each side are longitudinally aligned along the corresponding edge and are located at a distance less than the length of the portions 14.

In theory, a single sensor 50 would be sufficient for each of the two orthogonal directions 5. However, having two sensors 50 aligned, for each of the two directions 5, simplifies guiding and movement of the shuttle 6, and duplication of the sensors 50 on both sides, for each of the two directions 5, permits redundant measurement and therefore sturdy control.

The electronic unit 17 uses the presence signals of the sensors 50 and/or the distance signals of the sensors 43 to regulate the speed of rotation or the drive torque transmitted by the motors 28 to the wheels 19.

In other words, the walls 12 define a longitudinal reference to the right and a longitudinal reference to the left in order to guide movements of the shuttle 6 in the aisles 4 and to control stopping of the shuttle 6, in particular at intersections.

The electronic unit 17 is configured in such a way as to regulate the difference of speed or difference of torque between the right and left powered wheels in response to the distance signals so as to move the shuttle 6 to a position where it is centred in relation to the walls 12, i.e. so that longitudinal centreline axis of the shuttle 6 coincides substantially with the centreline axis of the lane in which it travels.

The electronic unit 17 attempts to maintain the shuttle 6 in a centred position, performing the following operations:
- according to the distance signals, it calculates deviation of the shuttle 6, i.e. deviation in relation to the centreline axis of the lane in which the shuttle 6 is travelling, and inclination of the centreline axis of the shuttle 6 in relation to the centreline axis of said lane;
- it regulates the difference in speed or the difference in torque between the right and left wheels in such a way as to eliminate said deviation and inclination; in particular, it modifies the torque or speed between the right and left wheels in such a way as to offset first of all deviation and then inclination.

At the point in which the longitudinal references defined by the walls 12 are interrupted at the intersections 13, the electronic control unit 17 activates the motors 28 in such a way that the shuttle 6 continues along its previous trajectory; alternatively, it interprets the last distance signals received in such a way as to extrapolate the position of the side ends of the lane at the intersections 13, and activates the motors 28 in such a way that the shuttle 6 remains centred in the lane according to such extrapolation.

Furthermore, the electronic unit 17 is configured in such a way as to detect the presence and/or the position of an intersection with another lane, at right angles to that travelled, according to the presence signals. In fact, the electronic unit 17 detects the presence of the intersections 13 at the moment in which the signals of the sensors 50 indicate the absence of the walls 12.

In particular, before the shuttle 6 reaches the intersection at which it must turn, the electronic unit 17 activates the motors 28 so as to slow down the shuttle 6 in order to increase measurement precision and then determines the positions of the ends 14a in relation to the path of the shuttle 6. To determine the positions of the ends 14a, detected by the sensors 50, the electronic unit 17 uses the signal of one or more encoders that measure the rotation angles of the wheels 19 or of the motors 28.

The electronic unit 17 then calculates the distance between the positions of the two ends 14a,14b in order to obtain an indicative value of the longitudinal extension of the intersection. Knowing this data, the electronic unit 17 activates the motors 28 so as to position the shuttle 6 along the direction 5 half way between the ends 14a,14b. This operation normally involves inversion of the motors 28 in order to move back towards the centre of the intersection once both ends 14a,14b have been detected.

Various alternatives exist for determination of the centre of the intersection in the direction 5. For example, an indicative value of the longitudinal dimension of the intersection could already be stored in the memory of the electronic unit 17 whereby it would be necessary only to record the position of a starting point of the intersection and add half of the value of the stored length.

In addition to the above described control methods, to guide the shuttle 6, the electronic unit 17 reduces the drive torque delivered by the motors 28 to the wheels 19 in the case of slipping of the wheels 19 in such a way as to eliminate such slipping. Any slipping is detected by verifying the speeds of rotation of the wheels 19 and checking whether such speeds differ substantially from each other.

Also, as mentioned above, the shuttle 6 is not slowed using brakes but by regulating the drive torque delivered by the motors 28 to the wheels 19. In other words, the braking applied by the motors 28 is used, recovering braking energy where possible in order to recharge the batteries on board the shuttle 6.

From the above description, it is evident that the shuttle 6 has a relatively reduced number of components. In fact, if the sensors 43 were fitted on the enclosure 15, at least twice the number of components would be required to detect the distance and/or the presence of longitudinal references for the two possible directions of movement at 90° described, and also for any bends to be negotiated outside the structure 2 of the warehouse 1. Also, each sensor 43 precisely determines the presence and/or the distance of the longitudinal reference, which is at right angles to the axis 27, in that it is close to the rail 9.

The shuttle 6 travels in the aisles 4 without impacts, can be stopped in precise positions, and is silent and reliable thanks to the sensors 43 and/or 50 and the control software installed in the electronic unit 17 to activate the motors 28. Eliminating impacts and guaranteeing positioning precision eliminates swaying, skidding and random accelerations of the load units. Furthermore, eliminating friction reduces the power consumption of the batteries of the shuttle 6.

As the walls 12 perform only a reference function and safety containment function, minor imprecision in assembly or construction of the walls 12 is acceptable as offset by the control provided by the electronic unit 17.

Also, use of the walls 12 as longitudinal reference along the path of the shuttle avoids expensive positioning and fitting of additional guide elements. For positioning at intersections, the walls 12 constitute obstacles to change of direction which are overcome by centring the shuttle 6 in relation to the points of interruption or start of the walls 12, taking into account the intersections 13, in a simple manner. However, similarly to the walls 12, another element or longitudinal edge already existing along the aisles 4 could be taken as reference.

The fact of using the same longitudinal reference to control both crosswise centring in the aisle 4 and centring in a longitudinal direction at the intersection is also advantageous.

According to signals received from the sensors 43,50, the electronic unit 17 is able to constantly diagnose any problems due to malfunctions or excessive wear of components (for example of the wheels 19 or of the rails 9).

Lastly, according to the above, it is evident that modifications and variations may be made to the wheel assembly 20 and shuttle 6 described herein without departing from the scope of the present invention as set forth in the appended claims.

In particular, a single longitudinal reference could be adopted instead of right and left references; and/or a different type of longitudinal reference from the walls 12 could be adopted, possibly an additional reference fastened to the structure 2; and/or the references on which control of guiding of the shuttle 6 is based could continue outside the structure 2. Also, the walls 12 could be arranged along the internal longitudinal edge of the tracks 11, instead of the external edge.

The number and type of sensors 43,50 could be different from those indicated: for example said sensors could consist of TV cameras or laser scanners suitably positioned to see the longitudinal references along the path. Also, the steering system could differ from that indicated by way of example.

Instead of detecting the portion 14, the position in which to stop the shuttle 6 at the intersection could be determined by identifying the presence and longitudinal dimension of at least one of the intersections 13, in such a way as to centre the position of the wheels 19 in relation to the tracks 11 where the shuttle 6 must turn.

Lastly, control of centring at the intersection, with suitable software capabilities, could be configured in such a way as to identity the presence/absence of the longitudinal references, exploiting the signals of the sensors 43, without fitting the sensors 50.

## Claims

1. A wheel assembly (20) of an automated warehouse shuttle (6); said wheel assembly comprising:
- a supporting structure (23);
- a wheel (19) coupled to said supporting structure (23) in such a way as to rotate about its rotation axis (27);
- a motor (28), which is coupled to said supporting structure (23) and rotates said wheel (19);
- pivoting means for pivotally coupling said supporting structure (23) to a supporting element (22) of said shuttle (6), so as to permit rotation of the wheel assembly (20) about a vertical axis (21);
**characterized by** comprising a contactless sensor (43) carried by said supporting structure (23), the contactless sensor (43) being configured to detect at least one longitudinal reference (12) and to emit signals indicating the crosswise position of the shuttle (6) in relation to said longitudinal reference (12) and/or signals indicating the presence/absence of said longitudinal reference (12) along the path of the shuttle.

2. The wheel assembly according to claim 1, **characterized by** comprising at least one idle roller (42) rotating about its vertical axis, carried by said supporting structure (23) beside said contactless sensor (43) and defining a side end of the wheel assembly (20).

3. The wheel assembly according to claim 2, **characterized by** comprising a pair of said rollers (42), which are arranged below the rotation axis (27) of said wheel (19) and on opposite sides of said contactless sensor (43), and are aligned with said contactless sensor (43) in a horizontal direction orthogonal to the rotation axis (27) of said wheel (19).

4. The wheel assembly according to any of the previous claims, **characterized in that** said contactless sensor (43) is aligned in a vertical direction with the rotation axis (27) of said wheel (19).

5. The wheel assembly according to any of the previous claims, **characterized in that** said contactless sensor (43) is a distance or position sensor.

6. The wheel assembly according to claim 5, **characterized in that** said contactless sensor (43) is an inductive sensor.

7. The wheel assembly according to any of the claims from 1 to 5, **characterized in that** said contactless sensor (43) is a video camera or a laser scanner.

8. An automated warehouse shuttle (6) comprising:
- an upper supporting surface (16) able to support a load unit;
- lifting means to lift/lower said upper supporting surface (16);
- four wheel assemblies (20) comprising a front right wheel, a left front wheel, a rear right wheel and a rear left wheel, able to travel on longitudinal tracks to move the shuttle (6) forward; said wheels (19) comprising at least one right-hand powered wheel and at least one left-hand powered wheel;
- contactless sensors (43,50) configured to detect at least one longitudinal reference (12) and to emit signals indicating the crosswise position of the shuttle (6) in relation to said longitudinal reference (12) and/or signals indicating the presence/absence of said longitudinal reference (12) along the path of the shuttle;
- control means (17) configured in such a way as to regulate the rotation speed or the drive torque of said powered wheels in response to said signals;
**characterized in that** at least one of said wheel assemblies (20) is made according to any of the previous claims.

9. The shuttle according to claim 8, **characterized in that** all four said wheel assemblies (20) are made according to any of the previous claims.

10. The shuttle according to claim 9, **characterized in that** said four wheel assemblies (20) can rotate by 90 ° about their respective vertical axes (21) in such a way as to permit movement of the shuttle (6) in two orthogonal directions.

11. The shuttle according to any of the claims from 8 to 10, **characterized in that** the contactless sensors (43) of said wheel assemblies (20) are configured in such a way as to emit respective signals indicating the position of said shuttle (6) in a crosswise direction, to the right and left, in relation to a advance direction of the shuttle (6); said control means (17) being configured in such a way as to adjust the difference in speed or torque between the right and left powered wheels in response to the signals of the contactless sensors (43).

12. The shuttle according to any of the claims from 8 to 11, **characterized in that** said contactless sensors (43,50) comprise at least one presence sensor (50) configured in such a way as to emit a presence signal indicating the presence/absence of said longitudinal reference (12); said control means (17) being configured in such a way as to calculate the positions at which said longitudinal reference ends and/or recommences along the path of the shuttle (6) in response to said presence signal and in such a way as to stop said right and left powered wheels according to said positions.

13. The shuttle according to claim 12, **characterized in that** said contactless sensors (43,50) comprise at least two presence sensors (50), which are aligned with each other parallel to a longitudinal centreline axis of the shuttle.

14. The shuttle according to any of the claims from 8 to 13, **characterized in that** said control means are configured in such a way as to maintain the shuttle (6) centred in a crosswise direction in said track:
- by calculating a deviation and inclination of the longitudinal centreline axis of the shuttle in relation to the longitudinal centreline axis of the track;
- by regulating the difference in speed or the difference in torque between right and left in such a way as to eliminate said deviation and said inclination.

15. The shuttle according to any of the claims from 8 to 14, **characterized in that** said control means are configured in such a way as to determinate the presence and/or the position of a intersection between two tracks, determining a first position (14a) in which said longitudinal reference starts and a second position (14b) in which said longitudinal reference (12) ends along the path of the shuttle (6).

## Patentansprüche

1. Radanordnung (20) eines automatischen Lagershuttles (6); wobei die Radanordnung umfasst:
- eine Trägerstruktur (23);
- ein Rad (19), das mit der Trägerstruktur (23) in einer solchen Weise gekoppelt ist, dass sich dieses um seine Drehachse (27) drehen kann;
- einen Motor (28), welcher mit der Trägerstruktur (23) gekoppelt ist und das Rad (19) dreht;
- eine Schwenkeinrichtung zum schwenkbaren Ankoppeln der Trägerstruktur (23) an ein Stützelement (22) des Shuttles (6), um so eine Drehung der Radanordnung (20) um eine vertikale Achse (21) zu ermöglichen;
**gekennzeichnet durch** einen berührungslosen Sensor (43), der von der Trägerstruktur (23) getragen wird, wobei der berührungslose Sensor (43) so konfiguriert ist, dass dieser wenigstens einen Längenbezug (12) erfasst und Signale sendet, welche die Querposition des Shuttles (6) in Bezug zu dem Längenbezug (12) anzeigen, und/oder Signale, welche das Vorhandensein/Fehlen des Längenbezugs (12) entlang des Weges des Shuttles anzeigen.

2. Radanordnung nach Anspruch 1, **gekennzeichnet durch** wenigstens eine Mitläuferrolle (42), die um ihre vertikale Achse dreht, getragen **durch** die Trägerstruktur (23) neben dem berührungslosen Sensor (43) und ein seitliches Ende der Räderanordnung (20) bildend.

3. Radanordnung nach Anspruch 2, **gekennzeichnet durch** ein Paar der Rollen (42), welche unterhalb der Drehachse (27) des Rades (19) und an gegenüberliegenden Seiten des berührungslosen Sensors (43) angeordnet sind und mit dem berührungslosen Sensor (43) in einer horizontalen Richtung senkrecht zur Drehachse (27) des Rades (19) ausgerichtet sind.

4. Radanordnung nach einem der vorhergehenden Ansprüche, **dadurch gekennzeichnet, dass** der berührungslose Sensor (43) in einer vertikalen Richtung mit der Drehachse (27) des Rades (19) ausgerichtet ist.

5. Radanordnung nach einem der vorhergehenden Ansprüche, **dadurch gekennzeichnet, dass** der berührungslose Sensor (43) ein Entfernungs- oder Positionssensor ist.

6. Radanordnung nach Anspruch 5, **dadurch gekennzeichnet, dass** der berührungslose Sensor (43) ein Induktionssensor ist.

7. Radanordnung nach einem der Ansprüche 1 bis 5, **dadurch gekennzeichnet, dass** der berührungslose Sensor (43) eine Videokamera oder ein Laserscanner ist.

8. Automatisches Lagershuttle (6) mit:
- einer oberen Trägerfläche (16), die eine Ladeeinheit tragen kann;
- einer Hebeeinrichtung, um die obere Trägerfläche (16) anzuheben/zu senken;
- vier Radanordnungen (20), mit einem vorderen rechten Rad, einem linken vorderen Rad, einem hinteren rechten Rad und einem hinteren linken Rad, die sich auf längs verlaufenden Spuren bewegen können, um das Shuttle (6) vorwärtszubewegen, wobei die Räder (19) wenigstens ein rechtsseitig angetriebenes Rad und wenigstens ein linksseitig angetriebenes Rad umfassen;
- berührungslose Sensoren (43, 50), die so konfiguriert sind, dass sie wenigstens einen Längsbezug (12) erfassen und Signale senden, welche die Querposition des Shuttles (6) in Bezug zu dem Längsbezug (12) anzeigen, und/oder Signale, welche das Vorhandensein/Fehlen des Längsbezugs (12) entlang des Weges des Shuttles anzeigen;
- eine Steuereinrichtung (17), die so konfiguriert ist, dass diese die Drehgeschwindigkeit oder das Drehmoment der angetriebenen Räder in Antwort auf die Signale regelt;
**dadurch gekennzeichnet, dass** wenigstens eines der Radanordnungen (20) nach einem der vorhergehenden Ansprüche hergestellt ist.

9. Shuttle nach Anspruch 8, **dadurch gekennzeichnet, dass** alle vier Radanordnungen (20) nach einem der vorhergehenden Ansprüche hergestellt sind.

10. Fahrzeug nach Anspruch 9, **dadurch gekennzeichnet, dass** die vier Radanordnungen (20) um 90° um ihre jeweiligen vertikalen Achsen (21) rotieren können, derart, dass eine Bewegung des Shuttles (6) in zwei senkrechte Richtungen ermöglicht wird.

11. Shuttle nach einem der Ansprüche 8 bis 10, **dadurch gekennzeichnet, dass** die berührungslosen Sensoren (43) der Radanordnungen (20) derart konfiguriert sind, dass sie jeweilige Signale senden, welche die Position des Shuttles (6) in einer Querrichtung, nach rechts und links, in Bezug zu einer Vorschubrichtung des Shuttles (6) anzeigen; wobei die Steuereinrichtung (17) so konfiguriert ist, dass diese die Differenz in Geschwindigkeit oder Drehmoment zwischen dem rechten und linken angetriebenen Rad in Antwort auf die Signale der berührungslosen Sensoren (43) einstellt.

12. Shuttle nach einem der Ansprüche 8 bis 11, **dadurch gekennzeichnet, dass** die berührungslosen Sensoren (43, 50) wenigstens einen Präsenzsensor (50) umfassen, der so konfiguriert ist, dass dieser ein Präsenzsignal sendet, welches die Präsenz/Abwesenheit des Längenbezugs (12) anzeigt; wobei die Steuereinrichtung (17) so konfiguriert ist, dass diese die Positionen, an welchen der Längsbezug entlang des Weges des Shuttles (6) endet und/oder beginnt, in Antwort auf das Präsenzsignal berechnet, und derart, dass das rechte und linke angetriebene Rad entsprechend dieser Positionen angehalten wird.

13. Shuttle nach Anspruch 12, **dadurch gekennzeichnet, dass** die berührungslosen Sensoren (43, 50) wenigstens zwei Präsenzsensoren (50) umfassen, welche miteinander parallel zu der längs verlaufenden Mittellinienachse des Shuttles ausgerichtet sind.

14. Shuttle nach einem der Ansprüche 8 bis 13, **dadurch gekennzeichnet, dass** die Steuereinrichtung so konfiguriert ist, dass diese das Shuttle (6) in einer Querrichtung in der Spur zentriert hält:
- durch Berechnen einer Abweichung oder Schrägstellung der längs verlaufenden Mittellinienachse des Shuttles in Bezug zu der längs verlaufenden Mittellinienachse der Spur;
- durch Regulieren der Geschwindigkeitsdifferenz oder des Drehmoments zwischen rechts und links, derart, dass die Abweichung und die Schrägstellung eliminiert werden.

15. Shuttle nach einem der Ansprüche 8 bis 14, **dadurch gekennzeichnet, dass** die Steuereinrichtung so konfiguriert ist, dass diese das Vorhandensein und/oder die Position eines Kreuzens zwischen zwei Spuren bestimmt, wobei entlang des Weges des Shuttles (6) eine erste Position (14a) bestimmt wird, in welcher der Längsbezug beginnt und eine zweite Position (14b), in welcher der Längsbezug (12) endet.

## Revendications

1. Ensemble de roue (20) d'une navette (6) d'entrepôt automatique ; ledit ensemble de roue comprenant :
une structure de support (23) ;
une roue (19) couplée à ladite structure de support (23) de façon à tourner autour de son axe de rotation (27) ;
un moteur (28) qui est couplé à ladite structure de support (23) et fait tourner ladite roue (19) ;
des moyens de pivot pour coupler par pivotement ladite structure de support (23) à un élément de support (22) de ladite navette (6), afin de permettre la rotation de l'ensemble de roue (20) autour d'un axe vertical (21) ;
**caractérisé en ce qu'**il comprend un capteur sans contact (43) porté par ladite structure de support (23), le capteur sans contact (43) étant configuré pour détecter au moins une référence longitudinale (12) et pour émettre des signaux indiquant la position transversale de la navette (6) par rapport à ladite référence longitudinale (12) et/ou des signaux indiquant la présence/absence de ladite référence longitudinale (12) le long de la trajectoire de la navette.

2. Ensemble de roue selon la revendication 1, **caractérisé en ce qu'**il comprend au moins une poulie folle (42) tournant autour de son axe vertical, portée par ladite structure de support (23) à côté dudit capteur sans contact (43) et définissant une extrémité latérale de l'ensemble de roue (20).

3. Ensemble de roue selon la revendication 2, **caractérisé en ce qu'**il comprend une paire desdites poulies (42) qui sont agencées au-dessous de l'axe de rotation (27) de ladite roue (19) et sur les côtés opposés dudit capteur sans contact (43) et sont alignées avec ledit capteur sans contact (43) dans une direction horizontale, orthogonale par rapport à l'axe de rotation (27) de ladite roue (19).

4. Ensemble de roue selon l'une quelconque des revendications précédentes, **caractérisé en ce que** ledit capteur sans contact (43) est aligné dans une direction verticale avec l'axe de rotation (27) de ladite roue (19).

5. Ensemble de roue selon l'une quelconque des revendications précédentes, **caractérisé en ce que** ledit capteur sans contact (43) est un capteur de distance ou de position.

6. Ensemble de roue selon la revendication 5, **caractérisé en ce que** ledit capteur sans contact (43) est un capteur inductif.

7. Ensemble de roue selon l'une quelconque des revendications 1 à 5, **caractérisé en ce que** ledit capteur sans contact (43) est une caméra vidéo ou un scanner laser.

8. Navette (6) d'entrepôt automatique comprenant :
une surface de support supérieure (16) pouvant supporter une unité de charge ;
des moyens de levage pour lever/abaisser ladite surface de support supérieure (16) ;
quatre ensembles de roue (20) comprenant une roue avant droite, une roue avant gauche, une roue arrière droite et une roue arrière gauche, pouvant se déplacer sur des voies longitudinales afin de faire avancer la navette (6) ; lesdites roues (19) comprenant au moins une roue droite motorisée et au moins une roue gauche motorisée ;
des capteurs sans contact (43, 50) configurés pour détecter au moins une référence longitudinale (12) et pour émettre des signaux indiquant la position transversale de la navette (6) par rapport à ladite référence longitudinale (12) et/ou des signaux indiquant la présence/absence de ladite référence longitudinale (12) le long de la trajectoire de la navette ;
des moyens de commande (17) configurés de façon à réguler la vitesse de rotation ou le couple d'entraînement desdites roues motorisées en réponse auxdits signaux ;
**caractérisée en ce qu'**au moins l'un desdits ensembles de roue (20) est réalisé selon l'une quelconque des revendications précédentes.

9. Navette selon la revendication 8, **caractérisée en ce que** tous les quatre desdits ensembles de roue (20) sont réalisés selon l'une quelconque des revendications précédentes.

10. Navette selon la revendication 9, **caractérisée en ce que** lesdits quatre ensembles de roue (20) peuvent tourner à 90° autour de leurs axes verticaux (21) respectifs de façon à permettre le mouvement de la navette (6) dans deux directions orthogonales.

11. Navette selon l'une quelconque des revendications 8 à 10, **caractérisée en ce que** les capteurs sans contact (43) desdits ensembles de roue (20) sont configurés de façon à émettre des signaux respectifs indiquant la position de ladite navette (6) dans une direction transversale, à droite et à gauche, par rapport à une direction d'avancement de la navette (6) ; lesdits moyens de commande (17) étant configurés de façon à ajuster la différence de vitesse ou de couple entre les roues motorisées droite et gauche en réponse aux signaux des capteurs sans contact (43).

12. Navette selon l'une quelconque des revendications 8 à 11, **caractérisée en ce que** lesdits capteurs sans contact (43, 50) comprennent au moins un capteur de présence (50) configuré de façon à émettre un signal de présence indiquant la présence/absence de ladite référence longitudinale (12) ; lesdits moyens de commande (17) étant configurés de façon à calculer les positions auxquelles ladite référence longitudinale se termine et/ou recommence le long de la trajectoire de la navette (6) en réponse audit signal de présence et de façon à arrêter lesdites roues motorisées droite et gauche selon lesdites positions.

13. Navette selon la revendication 12, **caractérisée en ce que** lesdits capteurs sans contact (43, 50) comprennent au moins deux capteurs de présence (50), qui sont alignés l'un par rapport à l'autre, parallèlement à un axe central longitudinal de la navette.

14. Navette selon l'une quelconque des revendications 8 à 13, **caractérisée en ce que** lesdits moyens de commande sont configurés de façon à maintenir la navette (6) centrée dans une direction transversale dans ladite voie :
en calculant une déviation et une inclinaison de l'axe central longitudinal de la navette par rapport à l'axe central longitudinal de la voie ;
en régulant la différence de vitesse ou la différence de couple entre la droite et la gauche de façon à supprimer ladite déviation et ladite inclinaison.

15. Navette selon l'une quelconque des revendications 8 à 14, **caractérisée en ce que** lesdits moyens de commande sont configurés de façon à déterminer la présence et/ou la position d'une intersection entre deux voies, déterminant une première position (14a) dans laquelle ladite référence longitudinale commence et une seconde position (14b) dans laquelle ladite référence longitudinale (12) se termine le long de la trajectoire de la navette (6).
